(19) Europäisches Patentamt
European Patent Office
Office européen des brevets

(11) Veröffentlichungsnummer: **0 313 907 A2**

(12) **EUROPÄISCHE PATENTANMELDUNG**

(21) Anmeldenummer: **88116803.3**

(22) Anmeldetag: **11.10.88**

(51) Int. Cl.⁴: **C08L 61/34 , C08G 14/14 , C04B 26/12**

(30) Priorität: **17.10.87 DE 3735253**

(43) Veröffentlichungstag der Anmeldung: **03.05.89 Patentblatt 89/18**

(84) Benannte Vertragsstaaten: **AT DE FR GB IT NL**

(71) Anmelder: **BASF Aktiengesellschaft**
**Carl-Bosch-Strasse 38**
**D-6700 Ludwigshafen(DE)**

(72) Erfinder: **Maempel, Lothar, Dr.**
**Spraulache 12 b**
**D-6835 Bruehl(DE)**
Erfinder: **Schmidt, Hans Juergen**
**Kopernikusstrasse 97**
**D-6700 Ludwigshafen(DE)**
Erfinder: **Fuessl, Ruediger**
**Neubergstrasse 30**
**D-6730 Neustadt(DE)**
Erfinder: **Druschke, Wolfgang, Dr.**
**Berliner Strasse 28**
**D-6716 Dirmstein(DE)**

# (54) Verwendung von resolierten Polymerdispersionen als Bindemittel für Isolierplatten und -einsätze sowie exotherme Massen für den Metallguss.

(57) Die Erfindung betrifft die Verwendung von im wesentlichen schutzkolloidfreien Einkomponentensystemen auf Basis einer Kombination aus einer wäßrigen Primärdispersion eines synthetischen Polymeren und einem wasserunlöslichen Polykondensat aus Phenolen und Aldehyden, die teilweise durch Ketone ersetzt sein können, wobei die phenolischen Komponenten des Polykondensats zunächst mit einer wäßrigen Polymerdispersion eines synthetischen Polymeren vermischt und in diesem Gemisch dann die Polykondensation mit den Aldehyden, die teilweise durch Ketone ersetzt sein können, unter üblichen Bedingungen durchgeführt worden ist, als Bindemittel zur Herstellung von Isolierplatten und -einsätzen sowie von exothermen Massen für den Metallguß.

EP 0 313 907 A2

# Verwendung von resolierten Polymerdispersionen als Bindemittel für Isolierplatten und -einsätze sowie exotherme Massen für den Metallguß

Diese Erfindung betrifft neue Bindemittel zur Herstellung von Isolierplatten und -einsätzen sowie von exothermen Massen für den Metallguß.

Beim Gießen von Formlingen aus Metallen, wie insbesondere Stählen und Aluminium sowie Aluminiumlegierungen werden im Hinblick auf eine möglichst vollständige Ausfüllung der Formen häufig Isolierplatten und -einsätze, z.B. Steigereinsätze (Speisereinsätze) sowie auch exotherme Massen bzw. exotherme Einsätze insbesondere beim Kokillen- und Strangguß eingesetzt. Durch diese Einsätze wird an verschiedenen Stellen der Formen ein zu rasches Abkühlen der Metallschmelzen vermieden und so durch verbesserte Füllung der Form eine verbesserte Formwiedergabe erzielt.

Die Isolierplatten und -einsätze sind hauptsächlich aus hochtemperaturbeständigen Massen, wie Schamotte, Mineralfasern, wie besonders Gesteinswolle und anorganischen Füllstoffen, wie Kieselgur, Titandioxid, Zirkondioxid sowie in manchen Fällen synthetischen Fasern, z. B. auf Basis von Polyamiden und gesättigten Polyestern sowie aus natürlichen Fasern, wie Baumwolle und Hanf aufgebaut, wobei meist mindestens 50, insbesondere mindestens 80 Gew.% der Massen aus hochtemperaturbeständigen Stoffen und gegebenenfalls mineralischen Fasern bestehen. Die Bestandteile dieser Art sind durch Bindemittel miteinander verbunden, wobei in der Praxis im allgemeinen hitzehärtbare Phenolharze vom Typ Novolack in Pulverform eingesetzt werden. Ein Nachteil dieser Bindemittel ist vor allem ihre umständliche Handhabung bei der Bearbeitung sowie das Abspalten großer Mengen Phenol bei ihrem Einsatz, was sowohl die Umwelt belastet als auch die Wiederaufbereitung des gegebenenfalls verwendeten Gießereisandes erschwert. Auch für die Herstellung von (geformten) exothermen Massen, beispielsweise auf Basis von Thermit (Gemisch aus Aluminiumgrieß und Trieisentetroxid) werden in der Praxis heute noch hitzehärtbare Phenolharze vom Novolack-Typ in Pulverform mit den oben angegebenen Nachteilen eingesetzt. In manchen Fällen verwendet man auch als Bindemittel Wasserglas, dessen Feuchtigkeitsempfindlichkeit jedoch von Nachteil ist.

Sowohl bei den bekannten Isolierplatten und -einsätzen als auch bei den exothermen Massen liegt der Anteil an Bindemitteln der genannten Art im allgemeinen zwischen 1 und 10 Gew.%, bezogen auf die Massen.

Aufgabe der vorliegenden Erfindung ist es nun, ein Bindemittel für die Herstellung von Isolierplatten und -einsätzen sowie von exothermen Massen bereitzustellen, das weder feuchtigkeitsempfindlich ist noch zu einer nennenswerten Umweltbelastung durch Phenol führt.

Es wurde nun gefunden, daß man Isolierplatten und -einsätze sowie exotherme Massen für den Metallguß erhält, die diese Nachteile nicht aufweisen, wenn man als Bindemittel zu ihrer Herstellung im wesentlichen schutzkolloidfreie Einkomponentensysteme auf Basis einer Kombination aus einer wäßrigen Primärdispersion eines synthetischen Polymeren und einem wasserunlöslichen Polykondensat aus Phenolen und Aldehyden, die teilweise durch Ketone ersetzt sein können, wobei die phenolischen Komponenten des Polykondensats zunächst mit einer wäßrigen Primärdispersion einer synthetischen Polymeren vermischt und in diesem Gemisch dann die Polykondensation mit den Aldehyden, die teilweise durch Ketone ersetzt sein können unter üblichen Bedingungen durchgeführt worden ist, verwendet. Derartige schutzkolloidfreie Einkomponentensysteme können auch als resolierte Polymerdispersionen bezeichnet werden. Sie können beispielsweise nach dem Verfahren der US-PS 4,623,679 hergestellt sein. Als phenolische Komponenten sollen vorzugsweise solche eingesetzt werden, die eine Löslichkeit von weniger als 10 g in 100 g Wasser von 20 °C bei pH < 5 aufweisen, insbesondere z.B. Bisphenol A oder dessen Gemische mit Phenol, $C_1$-$C_{12}$-alkylsubstituierten Phenolen und/oder Hydroxybiphenyl.

Als Aldehyde werden für die Polykondensation vorzugsweise Formaldehyd, Paraformaldehyd, Acetaldehyd oder deren Gemische eingesetzt. Bevorzugt ist außerdem, als wäßrige Primärdispersionen solche eines synthetischen Polymeren einzusetzen, das Glycidyl-, Carbonyl-, N-Methylol-, N-Alkoxymethyl-, Ether-, Amino- und/oder Hydrazo-Gruppen sowie gegebenenfalls zusätzlich Carboxyl- oder Hydroxylgruppen enthält.

Es eignen sich die üblichen Primärdispersionen, die Copolymerisate stabil dispergiert enthalten, insbesondere solche, die eine ausreichende Stabilität gegenüber pH-Wert-Änderungen sowie ausreichende Verträglichkeit mit der phenolischen Komponente des Polykondensat-Harzes aufweisen. Als Hauptmonomere enthalten die Primärdispersionen vorzugsweise Ester der Acryl- oder Methacrylsäure mit 1 bis 8 C-Atome enthaltenden Alkanolen, Styrol sowie gegebenenfalls Vinylchlorid oder Vinylidenchlorid und Butadien sowie ferner Acrylnitril einpolymerisiert. Als Hauptmonomere kommen auch Vinylester, wie besonders Vinylacetat und Vinylpropionat in Frage. Beispiele für geeignete (Meth)acrylester sind Methyl(meth)acrylat, Ethyl-

(meth)acrylat, Propyl(meth)acrylat, Butyl(meth)-acrylat und 2-Ethylhexyl(meth)acrylat. Die bevorzugten Copolymerisate der wäßrigen Primärdispersionen enthalten meist 0,1 bis 50, vorzugsweise 0,3 bis 15, insbesondere 0,5 bis 10 Gew.% an Monomeren mit funktionellen Gruppen einpolymerisiert. Derartige Monomere sind Glycidylgruppen enthaltende Monomere, wie Glycidylacrylat, Glycidylmethacrylat oder andere olefinisch ungesättigte Glycidylverbindungen, wie sie beispielsweise durch Umsetzung von Di-,Tri- oder Tetra-epoxyverbindungen mit Acrylsäure oder Methacrylsäure hergestellt sein können.

Carbonylgruppen enthaltende Monomere sind z.B. monoolefinisch ungesättigte Aldehyde und/oder Ketone, wie Acrolein, Methacrolein, Crotonaldehyd, Formylstyrol, Vinylmethylketon, Methylisopropenylketon, Diacetonacrylat, Diacetonacrylamid und/oder Butandiol-1,4-acrylatacetylacetat.

Geeignete N-Methylol- bzw. N-Alkoxymethylgruppen enthaltende Monomere sind besonders N-Methylol(meth)acrylamid bzw. N-Butoxymethyl-(meth)acrylamid.

Als Ethergruppen enthaltende Monomere seien Alkoxy(meth)acrylate mit 2 bis 10 C-Atomen in den Alkoxygruppen sowie Ester der Acrylsäure oder Methacrylsäure mit Oxaalkandiolen mit 2 bis 20 C-Atomen in den Oxaalkangruppen, wobei diese letztgenannten Ester neben Ethergruppen Hydroxylgruppen enthalten können, genannt.

Die aminogruppenhaltige Monomere sind z.B. Dimethylaminoethyl(meth)acrylat, Diethylaminoethyl(meth)acrylat, Dimethylaminoethyl(meth)acrylamid, Diethylaminoethyl(meth)acrylamid, Dimethylaminopropyl(meth)acrylamid und N-tert.-butylaminoethyl(meth)acrylat.

Hydrazogruppenhaltige Monomere kann man durch Einpolymerisieren von carbonylgruppenhaltigen Monomeren und Umsetzung dieser Verbindungen mit Hydrazin oder Dihydraziden, wie Adipinsäuredihydrazid, erhalten.

Von besonderem Interesse als Monomere mit funktionellen Gruppen sind $\alpha,\beta$-monoolefinisch ungesättigte Mono- und Dicarbonsäuren mit meist 3 bis 6 C-Atomen, wie Acrylsäure, Methacrylsäure, Crotonsäure, Maleinsäure, Fumarsäure, Itaconsäure und Monoester derartiger Dicarbonsäuren, wie Fumarsäure-, mono-n-butylester und Itaconsäuremonomethylester.

Auch Amide derartiger Carbonsäuren sind als Monomere mit funktionellen Gruppen von Interesse, wie besonders Acrylamid und Methacrylamid. Von Interesse sind ferner Hydroxylgruppen enthaltende Monomere, wie Hydroxyalkylacrylate und -methacrylate mit 2 bis 8, insbesondere mit 2 bis 4 C-Atomen in den Alkylgruppen, wie Hydroxyethyl-(meth)acrylat, Hydroxypropyl(meth)acrylat, Butandiol-1,4-mono(meth)acrylat oder Allylalkohol.

Die Primärdispersionen dieser Art können in üblicher Weise hergestellt sein, wobei die hierfür üblichen Dispergierhilfsmittel und Emulgatoren, z.B. Natriumlaurylsulfat, Natriumsalze von sauren Schwefelsäureestern von Addukten aus Octyl- oder Nonyl-Phenol mit 5 bis 50 mol Ethylenoxid, Addukte von Octyl- oder Nonylphenol mit 5 bis 50 mol Ethylenoxid, Natrium-Dodecylbenzolsulfonat, Fettalkohol-Ethylenoxidadukkte, Gemische von anionischen und nichtionischen Emulgatoren sowie von üblichen Polymerisationsinitiatoren, z.B. von Peroxidisulfaten, wie Kaliumperoxidisulfat und Ammoniumperoxidisulfat sowie Redoxsysteme mitverwendet sein können und bei Temperaturen zwischen 30 und 150 °C in wäßriger Emulsion polymerisiert sein kann.

Als phenolische Komponenten für das in der wäßrigen Primärdispersion herzustellende Phenolharz können z.B. folgende Phenole verwendet werden: Phenol, alkylsubstituierte Phenole mit 1 bis 12 Kohlenstoffatomen in der Alkylgruppe, wie Octyl-, Nonyl-, Dodecylphenol, arylsubstituierte Phenole, wie 2-Hydroxy-biphenyl, 4-Hydroxy-biphenyl, Bisphenole der allgemeinen Formel

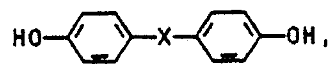

worin X einen gegebenenfalls verzweigten Alkylrest mit 1 bis 12, vorzugsweise 3 bis 7 Kohlenstoffatomen oder auch $-SO_2-$ bedeutet, insbesondere 4,4′-Dihydroxy-diphenyl-propan (Bisphenol A) und 4,4′-Dihydroxy-diphenyl-sulfon (Bisphenol S) oder deren Mischungen, sowie alkylsubstituierte Phenole und/oder Hydroxybiphenyl.

Als Carbonylkomponente für die Kondensation, d.h. als Aldehyde kommen Formaldehyd, Acetaldehyd sowie deren oligomeren Formen, Acrolein und Dialdehyde, wie Glutardialdehyd, in Betracht, die gegebenenfalls teilweise durch Ketone, wie Aceton ersetzt sein können. Bevorzugt sind Formaldehyd, Paraformaldehyd und Acetaldehyd als Carbonylkomponenten für die Polykondensation.

Das molare Verhältnis der phenolischen Komponente zu Carbonylgruppen der Aldehyde und/oder Ketone kann im allgemeinen zwischen etwa 1:0,8 bis 1:3 variiert werden. Bevorzugt ist ein Verhältnis von 1:1,5 bis 1:2,5, insbesondere von etwa 1:2.

Zunächst wird die phenolische Komponente mit der wäßrigen Primärdispersion, beispielsweise unter Rühren, vorzugsweise bei 50 bis 150 °C, gegebe nenfalls unter Druck vermischt. Die phenolischen Komponenten können in fester oder flüssiger Form zu den wäßrigen Primärdispersionen gegeben werden, wobei gegebenenfalls die Temperatur zum Zeitpunkt der Zugabe niedriger ist als bei

dem nachfolgenden Einmischen.

Die Kondensation von phenolischer Komponente mit Aldehyd (oder Keton) zur Bildung des Polykondensats in der wäßrigen Primärdispersion kann bei Temperaturen zwischen Raumtemperatur und etwa 200 °C, gegebenenfalls unter Druck, vorzugsweise zwischen 50 und 100 °C bei dem "natürlichen" pH-Wert der Primärdispersion, gegebenenfalls auch unter Zusatz von sauren oder basischen Katalysatoren wie anorganischen oder organischen Säuren, Ammoniak oder Aminen durchgeführt werden. Abhängig von den Kondensationsbedingungen und den verwendeten Katalysatoren werden unterschiedlich reaktive Harze gewonnen. Bisweilen ist es günstig, die Kondensation zunächst bei dem meist sauren "natürlichen" pH-Wert der Primärdispersion oder unter Zusatz saurer Katalysatoren zu beginnen und dann später nach Neutralisation im alkalischen Bereich bei pH-Werten von 8 bis 10 fortzusetzen. Das Mischungsverhältnis Copolymerisat/Phenolharz kann von 99:1 bis 1:1 variiert werden, bevorzugt ist ein Mischungsverhältnis von 98:2 bis 2:1; die obere Grenze für das Verhältnis Phenolharz:Copolymer der Primärdispersion ist durch das Auftreten neuer Teilchenpopulationen aus reinem Phenolharz gegeben, die stets erheblich größere Teilchendurchmesser (Ø > 10 µ) besitzen und - besonders bei basisch katalysierten Harzen -bereits in Mengen von wenigen Gewichtsprozent eine deutliche Trübung des reinen Bindemittelfilms hervorrufen. Der Feststoffgehalt der phenolharzhaltigen Dispersion kann zwischen 10 und 70 Gew.%, vorzugsweise zwischen 30 und 60 Gew.% liegen.

Die im folgenden genannten Teile und Prozente sind, soweit nicht anders angegeben, Gewichtsteile bzw. Gewichtsprozente.

Herstellung einer Primärdispersion A

In einem Witt'schen-Topf mit Thermostat, Rührer, Rückflußkühler, Zulaufgefäßen, Thermometer und Stickstoffzuleitung werden 20 Teile Wasser vorgelegt, mit Stickstoff gespült und auf 85 °C aufgeheizt. Dann gab man·6,2 Teile Zulauf 1 und 1 Teil Zulauf 2 zu, polymerisiert die Mischung 15 Minuten an und fährt dann die Zuläufe 1 und 2 kontinuierlich in 2 bis 2,25 Stunden dem Reaktor zu. Man polymerisiert noch 2 Stunden nach und kühlt die Dispersion. Schließlich gibt man noch Zulauf 3 zu und kühlt die Mischung ab. Die Zuläufe sind wie folgt zusammengesetzt:

Zulauf 1

21 Teile n-Butylacrylat
20 Teile Ethylhexylacrylat
9 Teile Styrol
1,5 Teile Acrylsäure
1,25 Teile Acrylamid, 50 %ige wäßrige Lösung
3,75 Teile Nonylphenoloxethylat (mit ca. 25 Ethylenoxideinheiten/mol), 20 %ige wäßrige Lösung)
1,9 Teile Na-Fettalkoholsulfonat, 40 %ige wäßrige Lösung
19,6 Teile Wasser

Zulauf 2

0,25 Teile Na-Persulfat
10 Teile Wasser

Zulauf 3

0,15 Teile Ammoniakwasser

Die entstandene Dispersion A hat einen Feststoffgehalt von 49 Gew.%, den pH-Wert 4 bis 5 und eine mittlere Teilchengröße von 150 nm (gemessen mit dem Nanosizer).

Herstellung einer phenolharzhaltigen Dispersion A/1

In einer Apparatur wie oben beschrieben werden 200 Teile der Primärdispersion A. 20 Teile Wasser, 2,2 Teile Dimethylethanolamin und 25 Teile Bisphenol A 1,5 Stunden lang bei 90 °C verrührt. Dann gibt man 20 g wäßrige Formaldehyd-Lösung (37 %ig) und nach 1 Stunde weitere 4,4 Teile Dimethylethanolamin zu. Nach weiteren 4 Stunden Rühren bei 90 °C erhält man eine schwach gelb gefärbte, dünnflüssige Dispersion eines Feststoffgehalts von 47 %, eines pH-Werts von 9,5-10,5 und einer praktisch unveränderten Teilchengröße von 150-160 nm (Nanosizer). Die Dispersion ist bei Raumtemperatur mindestens 6 Monate lagerstabil.

Herstellung einer phenolharzhaltigen Dispersion A/2

Man verfährt wie oben beschrieben, verwendet jedoch 200 Teile der Primärdispersion A, 40 Teile Wasser, 2,2 Teile g Dimethylethanolamin und 50 Teile Bisphenol A. Man erhält eine dünnflüssige lagerstabile Dispersion eines Feststoffgehalts von 47,8 Gew.%, eines pH-Werts von 8,5 und einer Teilchengröße von 230 nm (Nanosizer).

Die in an sich üblicher Weise entsprechend hergestellten resolierten Polymerdispersionen können mit Vorteil für das Binden der für die Herstellung von Isolierplatten und -einsätzen üblichen anorganischen Stoffe, wie Schamotte und Gesteinsfasern, eingesetzt werden, wobei im allgemeinen 1 bis 10 Gew.% der resolierten Polymerdispersion, bezogen auf die gesamten Massen, insbesondere 2 bis 4 eingesetzt werden können. Dabei werden die anorganischen Bestandteile beispielsweise in geeigneten Formen eingebracht und mit der resolierten Polymerdispersion behandelt, wobei es von Vorteil ist, Fällungsmittel für die Dispersionen mit zu verwenden. Als solche kommen besonders Salze mehrwertiger Metalle, wie Aluminiumsulfat und Calciumchlorid sowie Zinksalze, wie Zinkchlorid und Zinknitrat in Frage sowie auch hochmolekulare kationische Acrylamidpolymerisate in wäßriger Lösung. Die Menge an derartigen Fällungsmitteln liegt meist im Bereich von 0,01 bis 0,5 Gew.%, insbesondere von 0,05 bis 0,2 Gew.% der Fällungsmittel (fest) bezogen auf das Gewicht der resolierten Polymerdispersion (fest). Die erhaltenen Formlinge werden dann im allgemeinen bei erhöhter Temperatur, meist bei Temperaturen von 100 bis 180 °C, insbesondere bei 120 bis 150 °C getrocknet, wobei mit Vorteil Heißluft angewandt werden kann. Nach dem Trocknen weisen sie hervorragende Festigkeit und Wärmestandfestigkeit auf, was insbesondere im Hinblick auf den thermoplastischen Charakter der Primärdispersionen (aus denen die resolierten Dispersionen hergestellt sind) überraschend ist. Die Formlinge sind zudem bei ihrem Einsatz umweltfreundlich, da bei dem Einsatz im Metallguß praktisch kein Phenol abgespalten wird und die Formlinge zeigen im Vergleich zu mit Phenolharzen in üblicher Weise gebundenen Formlingen eine erhöhte Grünstandfestigkeit auf.

Bei der erfindungsgemäßen Verwendung der resolierten Polymerdispersionen können übliche Zusätze, wie Antischaummittel, Netzmittel und Dispergiermittel sowie Verdickungsmittel und klebrigmachende oder reaktive Harze in den üblichen Mengen mitverwendet werden.

## Ansprüche

Verwendung von im wesentlichen schutzkolloidfreien Einkomponentensystemen auf Basis einer Kombination aus einer wäßrigen Primärdispersion eines synthetischen Polymeren und einem wasserunlöslichen Polykondensat aus Phenolen und Aldehyden, die teilweise durch Ketone ersetzt sein können, wobei die phenolischen Komponenten des Polykondensats zunächst mit einer wäßrigen Polymerdispersion eines synthetischen Polymeren vermischt und in diesem Gemisch dann die Polykondensation mit den Aldehyden, die teilweise durch Ketone ersetzt sein können, unter üblichen Bedingungen durchgeführt worden ist, als Bindemittel zur Herstellung von Isolierplatten und -einsätzen sowie von exothermen Massen für den Metallguß.